# EUROPÄISCHE PATENTANMELDUNG

(11) **EP 2 889 850 A1**
(43) Veröffentlichungstag der Anmeldung: **01.07.2015**
(21) Anmeldenummer: 14196354.6
(22) Anmeldetag: 04.12.2014
(51) Int. Cl.: G08G 1/01, B60W 40/107, B60W 40/08, G01C 21/34, G08G 1/0967

(54) **Verfahren und System zur Bestimmung von Parametern eines Modells zur Längsführung und zur Bestimmung einer Längsführung für ein Fahrzeug**

(30) Priorität: 17.12.2013 DE 102013226195
(71) Anmelder: Volkswagen Aktiengesellschaft, 38440 Wolfsburg (DE)
(72) Erfinder: Hoch, Nicklas, 30559 Hannover (DE)

(57) **Zusammenfassung**

Zur Bestimmung von Parametern (Aₓ, A_{x-y}) eines Modells einer prognostizierten Längsführung eines Fahrzeugs (10) wird ein Abschnitt einer Fahrroute des Fahrzeugs (10) mit Hilfe von Sensoren (3) des Fahrzeugs (10) erfasst, wird ein tatsächlicher Geschwindigkeits-Zeit-Verlauf (31-33) des Fahrzeugs (10) beim Durchfahren des Abschnitts erfasst und werden die Parameter (Aₓ, A_{x-y}) abhängig von dem tatsächlichen Geschwindigkeits-Zeit-Verlauf (31-33 bestimmt. Dabei ist dem Abschnitt ein vorbestimmter Abschnittstyp und ein Referenz-Geschwindigkeits-Zeit-Verlauf (21; 22) zugewiesen, welcher von dem Abschnittstyp abhängig ist. Mit den Parametern (Aₓ, A_{x-y}) ist ausgehend von dem Referenz-Geschwindigkeits-Zeit-Verlauf (21; 22) ein voraussichtlicher Geschwindigkeits-Zeit-Verlauf (23) bestimmbar.

Zur Bestimmung einer prognostizierten Längsführung für ein Fahrzeug (10) werden folgende Schritte durchlaufen:
Bestimmen einer Fahrroute des Fahrzeugs (10), wobei die Fahrroute von einer aktuellen Position des Fahrzeugs (10) bis zu einer Zielposition der Fahrroute verläuft.
Unterteilen der Fahrroute in Abschnitte (41-45), wobei jeder der Abschnitte (41-45) einem vorbestimmten Abschnittstyp zugeordnet wird, wobei jedem Abschnitt (41-45) ein Referenz-Geschwindigkeits-Zeit-Verlauf (21; 22) zugeordnet ist, welcher von dem Abschnittstyp des jeweiligen Abschnitts (41-45) abhängig ist.
Bestimmen eines voraussichtlichen Geschwindigkeits-Zeit-Verlaufs (23) für jeden der Abschnitte (41-45), indem der Referenz-Geschwindigkeits-Zeit-Verlauf (21; 22) des jeweiligen Abschnitts (41-45) mit Parametern (Ax, Ax-y), welche von einem aktuellen Fahrer abhängig sind, beaufschlagt wird, um den voraussichtlichen Geschwindigkeits-Zeit-Verlauf (23) des jeweiligen Abschnitts (41-45) zu bestimmen.
Bestimmen der Längsführung mittels der voraussichtlichen Geschwindigkeits-Zeit-Verläufe (23) der Abschnitte (41-45) der Fahrroute.

## Beschreibung

Die vorliegende Erfindung betrifft zum einen ein Verfahren und ein System, um Parameter eines Modells einer prognostizierten Längsführung eines Fahrzeugs zu bestimmen, und zum anderen ein Verfahren und ein System, um insbesondere basierend auf dem vorab genannten Verfahren bzw. System eine prognostizierte Längsführung für ein Fahrzeug zu bestimmen.

Die DE 10 2012 003 292 A1 offenbart ein Verfahren zum Bereitstellen einer Navigationsfunktion in einem Kraftfahrzeug. Dabei wird abhängig von vorab bestimmten Parametersätzen eine prognostizierte Restreichweite visualisiert.

Die DE 103 43 178 A1 beschreibt ein Fahrerassistenzsystem mit variabler Längsführungsstrategie. Dabei wird von einem Lernmodul das Fahrerverhalten erfasst und anhand des erfassten Fahrerverhaltens eine gespeicherte Längsführungsstrategie ausgewählt.

Die DE 10 2009 039 774 A1 betrifft die Steuerung eines Kraftfahrzeugs, um Fahrfunktionen und/oder Leistungsmerkmale zu- und abzuschalten und/oder einzustellen. Dabei wird das Fahrkönnen des Fahrers ermittelt und abhängig davon ein Leistungsmerkmal und/oder eine Fahrfunktion aktiviert oder deaktiviert.

Die Längsführung eines Fahrzeugs beschreibt, wie sich das Fahrzeug in Richtung seiner Längsachse, also in Hin- und Rückrichtung des Fahrzeugs, bewegt. Daher hängt die Längsführung des Fahrzeugs von der Beschleunigung (negativ und positiv) des Fahrzeugs und von der Geschwindigkeit des Fahrzeugs ab. Anhand der (prognostizierten) Längsführung kann mit anderen Worten beispielsweise ermittelt werden, wann sich das Fahrzeug wo auf einer vorgegebenen Fahrroute befinden wird. Umso genauer die Längsführung oder besser die prognostizierte Längsführung des Fahrzeugs bekannt ist, desto besser kann die voraussichtliche Fahrtdauer zu einem Fahrtziel oder die voraussichtliche Reichweite abhängig von der im Fahrzeug vorhandenen Energiemenge angegeben werden. Darüber hinaus kann bei einem Hybridfahrzeug die Hybridstrategie, mit welcher beispielsweise entschieden wird, wann zum Antrieb des Fahrzeugs der Elektromotor eingesetzt wird, umso besser geregelt werden, je genauer die prognostizierte Längsführung des Fahrzeugs bekannt ist.

Daher stellt sich die vorliegende Erfindung die Aufgabe, die Bestimmung der prognostizierten Längsführung eines Fahrzeugs gegenüber dem Stand der Technik zu verbessern.

Diese Aufgabe wird erfindungsgemäß durch ein Verfahren zur Bestimmung von Parametern eines Modells einer prognostizierten Längsführung nach Anspruch 1, durch ein Verfahren zur Bestimmung einer prognostizierten Längsführung nach Anspruch 3, durch ein System zur Bestimmung von Parametern eines Modells einer prognostizierten Längsführung nach Anspruch 10, durch ein System zur Bestimmung einer prognostizierten Längsführung nach Anspruch 9 und durch ein Fahrzeug nach Anspruch 13 gelöst. Die abhängigen Ansprüche definieren bevorzugte und vorteilhafte Ausführungsformen der vorliegenden Erfindung.

Im Rahmen der vorliegenden Erfindung wird ein Verfahren zur Bestimmung von Parametern eines Modells einer prognostizierten Längsführung eines Fahrzeugs bereitgestellt. Dabei umfasst das Verfahren folgende Schritte:
- Erfassen eines Abschnitts einer Fahrroute des Fahrzeugs mittels Sensoren des Fahrzeugs und gegebenenfalls mittels zusätzlichen Informationen, wie beispielsweise Kartendaten. Dabei kann auch mit so genannten prädiktiven Streckendaten gearbeitet werden, welche einen Teil der Karteninformation für die vorausliegende Route des Fahrzeugs beinhalten. Beispielsweise anhand eines GPS-Empfängers oder einer Kamera kann die aktuelle Position des Fahrzeugs und damit der aktuelle Abschnitt der Fahrroute, welcher einem bestimmten Abschnittstyp zugeordnet werden kann, erfasst werden.
- Beim Durchfahren des Abschnitts mit dem Fahrzeug wird ein tatsächlicher Geschwindigkeits-Zeit-Verlauf des Fahrzeugs erfasst. Dazu wird beispielsweise mit den vorab beschriebenen Sensoren der Beginn und das Ende des Abschnitts erfasst und mittels eines Geschwindigkeitsmessers des Fahrzeugs in dieser Zeitspanne, in welcher der Abschnitt durchfahren wird, die Geschwindigkeit des Fahrzeugs über der Zeit aufgezeichnet.
- Abhängig von dem tatsächlichen Geschwindigkeits-Zeit-Verlauf werden die Parameter des Modells bestimmt oder angepasst.

Dabei besitzt der Abschnitt einen bestimmten Referenz-Geschwindigkeits-Zeit-Verlauf, welcher von dem Abschnittstyp des erfassten Abschnitts der Fahrroute abhängt. Die Parameter werden durch den Schritt des Bestimmens der Parameter derart bestimmt, dass ausgehend von diesem Referenz-Geschwindigkeits-Zeit-Verlauf ein voraussichtlicher Geschwindigkeits-Zeit-Verlauf bestimmt werden kann. Dazu können die Parameter beispielsweise derart bestimmt oder angepasst werden, dass mit Hilfe der Parameter der Referenz-Geschwindigkeits-Zeit-Verlauf an den vorab erfassten tatsächlichen Geschwindigkeits-Zeit-Verlauf angepasst wird. Mit anderen Worten werden die Parameter anhand des tatsächlichen Geschwindigkeits-Zeit-Verlaufs derart bestimmt oder angepasst, dass ein mit den Parametern zukünftig zu bestimmender voraussichtlicher Geschwindigkeits-Zeit-Verlauf möglichst gut mit der Realität übereinstimmt, welche anhand des tatsächlichen Geschwindigkeits-Zeit-Verlaufs erfasst wurde.

Der Referenz-Geschwindigkeits-Zeit-Verlauf weist insbesondere dem jeweiligen Abschnitt der Fahrroute abhängig vom Abschnittstyp insgesamt oder abschnittsweise eine Referenz-Geschwindigkeit zu. Diese Referenz-Geschwindigkeit entspricht beispielsweise einer Geschwindigkeit, mit welcher ein durchschnittlicher Fahrer bei durchschnittlichen Bedingungen den entsprechenden Abschnitt durchfahren würde. Mit Hilfe der Parameter kann der Referenz-Geschwindigkeits-Zeit-Verlauf quasi an den Fahrer und den Kontext (Fahrbedingungen) angepasst werden, um den voraussichtlichen Geschwindigkeits-Zeit-Verlauf eines beliebigen zukünftig zu durchfahrenden Abschnitts zu bestimmen.

Die Parameter werden dabei insbesondere abhängig vom Fahrer und/oder abhängig vom Abschnittstyp bestimmt. Beispielsweise kann für jeden Fahrer und/oder jeden Abschnittstyp ein Parametersatz existieren, wobei mit dem erfindungsgemäßen Verfahren derjenige Parametersatz bzw. diejenigen Parameter bestimmt werden, welche dem aktuellen Fahrer und/oder dem Abschnittstyp des erfassten Abschnitts zugeordnet sind.

Auf diese Weise kann durch die vorliegende Erfindung das Modell der prognostizierten Längsführung sehr genau an die tatsächliche Längsführung des Fahrzeugs angepasst werden, da das erfindungsgemäße Verfahren den Fahrer und/oder den Typ des jeweiligen Abschnitts der Fahrroute berücksichtigen kann.

Im Rahmen der vorliegenden Erfindung wird auch ein Verfahren zur Bestimmung einer prognostizierten Längsführung für ein Fahrzeug bereitgestellt. Dieses Verfahren zur Bestimmung der prognostizierten Längsführung umfasst folgende Schritte:
- Bestimmen einer Fahrroute des Fahrzeugs. Dabei verläuft die Fahrroute von der aktuellen Position des Fahrzeugs bis zu einer Zielposition der Fahrroute, welche beispielsweise anhand bestimmter Eingabemittel des Fahrzeugs vorgegeben werden kann.
- Unterteilen der Fahrroute in Abschnitte. Dabei ist jeder dieser Abschnitte einem bestimmten Abschnittstyp zugeordnet oder weist diesen Abschnittstyp auf. Jedem Abschnittstyp ist wiederum ein vorbestimmter Referenz-Geschwindigkeits-Zeit-Verlauf zugeordnet oder weist diesen Referenz-Geschwindigkeits-Zeit-Verlauf auf. Daher ist über den Abschnittstyp auch jedem Abschnitt der Fahrroute ein bestimmter Referenz-Geschwindigkeits-Zeit-Verlauf zugeordnet.
- Bestimmen eines voraussichtlichen Geschwindigkeits-Zeit-Verlaufs für jeden der Abschnitte, indem der Referenz-Geschwindigkeits-Zeit-Verlauf des jeweiligen Abschnitts mit Parametern, welche von dem jeweiligen Fahrer abhängen, beaufschlagt wird, um dadurch den voraussichtlichen Geschwindigkeits-Zeit-Verlauf des jeweiligen Abschnitts zu bestimmen. Mit anderen Worten existieren vom Fahrer abhängige Parameter, welche beispielsweise mit dem vorab beschriebenen erfindungsgemäßen Verfahren zur Bestimmung der Parameter eines Modells einer prognostizierten Längsführung erlernt wurden, mit welchen ausgehend von dem jeweiligen Referenz-Geschwindigkeits-Zeit-Verlauf des jeweiligen Abschnitts der voraussichtliche Geschwindigkeits-Zeit-Verlauf des jeweiligen Abschnitts bestimmt wird.
- Bestimmen der prognostizierten Längsführung anhand der voraussichtlichen Geschwindigkeits-Zeit-Verläufe aller Abschnitte der Fahrroute. Beispielsweise indem die Geschwindigkeits-Zeit-Verläufe aller Abschnitte quasi in der entsprechenden Reihenfolge der Abschnitte aneinandergereiht werden, wird die prognostizierte Längsführung des Fahrzeugs bestimmt.

Durch die Unterteilung der Fahrroute in verschiedene Abschnitte unterschiedlicher Abschnittstypen können die Gegebenheiten einer Fahrroute nahezu optimal bei der Bestimmung der prognostizierten Längsführung berücksichtigt werden. Darüber hinaus ermöglicht die Abhängigkeit der Parameter von dem jeweiligen Fahrer, dass bei der Bestimmung der prognostizierten Längsführung vorteilhafterweise die jeweiligen Eigenarten des Fahrers berücksichtigt werden.

Vorteilhafterweise sind die Parameter nicht nur vom Fahrer, sondern auch von dem jeweiligen Abschnittstyp abhängig, so dass für jeden Fahrer für jeden Abschnittstyp ein Parametersatz, welcher entsprechende Parameter umfasst, vorhanden ist.

Indem die Parameter nicht nur von dem Fahrer, sondern auch von dem Abschnittstyp abhängen, können bei der Bestimmung der prognostizierten Längsführung vorteilhafterweise auch die von dem jeweiligen Abschnittstyp abhängigen Eigenschaften des jeweiligen Fahrers berücksichtigt werden.

Das Bestimmen des voraussichtlichen Geschwindigkeits-Zeit-Verlaufs umfasst insbesondere folgende Schritte:
- Erfassen eines aktuellen Abschnitts der Fahrroute des Fahrzeugs mittels zumindest eines Sensors des Fahrzeugs. In diesem Schritt erfasst das erfindungsgemäße Verfahren beispielsweise mit Hilfe eines GPS-Empfängers, auf welchem Abschnitt der Fahrroute sich das Fahrzeug gerade befindet.
- Erfassen eines tatsächlichen Geschwindigkeits-Zeit-Verlaufs des Fahrzeugs beim Durchfahren des aktuellen Abschnitts. Indem beispielsweise die Daten eines Geschwindigkeitsmessers des Fahrzeugs über der Zeit protokolliert werden, wird beim Durchfahren des aktuellen Abschnitts der tatsächliche Geschwindigkeits-Zeit-Verlauf erfasst und abgespeichert.
- Anpassen der Parameter in Abhängigkeit von dem tatsächlichen Geschwindigkeits-Zeit-Verlauf. In diesem Schritt werden die Parameter anhand des tatsächlichen Geschwindigkeits-Zeit-Verlaufs derart bestimmt oder angepasst, dass anhand der angepassten Parameter ausgehend von dem Referenz-Geschwindigkeits-Zeit-Verlauf des jeweiligen Abschnitts bzw. Abschnittstyps ein zukünftig zu bestimmender voraussichtlicher Geschwindigkeits-Zeit-Verlauf für einen Abschnitt dieses Abschnittstyps besser der Realität entspricht, als dies vor der Anpassung der Fall war.

Indem jeweils für den aktuellen Abschnitt der Fahrroute der tatsächliche Geschwindigkeits-Zeit-Verlauf erfasst und abhängig von diesem die Parameter angepasst werden, wird erfindungsgemäß quasi erlernt, wie sich der jeweilige Fahrer bei einem jeweiligen Abschnittstyp verhält. Dadurch kann die Bestimmung der prognostizierten Längsführung vorteilhafterweise verbessert werden.

Erfindungsgemäß können folgende Abschnittstypen existieren:
- Der Abschnittstyp Kreuzung:
   Der Kreuzungsabschnittstyp beschreibt einen Abschnitt der Fahrroute, welcher über eine Straßenkreuzung verläuft. Dabei beginnt ein Abschnitt dieses Abschnittstyps eine vorbestimmte Strecke vor der Kreuzung, an deren Anfang das Fahrzeug in der Regel beginnt, die Geschwindigkeit des Fahrzeugs aufgrund der Kreuzung zu reduzieren. Der Abschnitt dieses Abschnittstyps endet eine weitere vorbestimmte Strecke nach der Kreuzung, an deren Ende das Fahrzeug in der Regel seine Beschleunigung nach der Kreuzung beendet hat und eine von einer nach der Kreuzung gültigen Höchstgeschwindigkeit abhängige Geschwindigkeit aufweist.
   Der Kreuzungsabschnittstyp kann in Untertypen unterteilt werden, welche davon abhängen, ob die Fahrroute geradlinig oder in Form einer Rechtskurve oder Linkskurve über die Kreuzung verläuft.
   Der Referenz-Geschwindigkeits-Zeit-Verlauf des Kreuzungsabschnittstyps wird demnach insbesondere durch seine Untertypen und einen aktuellen Kreuzungsverkehr (Anzahl und Verhalten von Fremdfahrzeugen im Kreuzungsbereich) vorgegeben. Für die Untertypen Rechtskurve oder Linkskurve kann auch der Kurvenradius berücksichtigt werden, um die Geschwindigkeit zu bestimmen, mit welcher gemäß des Referenz-Geschwindigkeits-Zeit-Verlaufs das Fahrzeug die Kreuzung durchfährt.
- Der Abschnittstyp Ampel:
   Der Ampelabschnittstyp beschreibt einen Abschnitt der Fahrroute, auf welchem sich eine Lichtsignalanlage bzw. Ampelanlage befindet. Ähnlich wie der Kreuzungsabschnittstyp beginnt ein Abschnitt des Ampelabschnittstyp eine vorbestimmte Strecke vor der Ampelanlage, an deren Anfang das Fahrzeug in der Regel beginnt, die Geschwindigkeit des Fahrzeugs aufgrund der Ampelanlage zu reduzieren. Ein Abschnitt des Ampelabschnittstyps endet eine weitere vorbestimmte Strecke nach der Ampelanlage,
      an deren Ende das Fahrzeug in der Regel seine Beschleunigung nach der Ampelanlage beendet hat und eine von einer nach der Ampelanlage gültigen Höchstgeschwindigkeit abhängige Geschwindigkeit aufweist.

Wenn die Ampelanlage an einer Kreuzung steht, kann auch der Ampelabschnittstyp in Untertypen unterteilt werden, welche davon abhängen, ob die Fahrroute geradlinig oder in Form einer Rechtskurve oder Linkskurve über die Kreuzung verläuft.

Der Referenz-Geschwindigkeits-Zeit-Verlauf des Ampelabschnittstyps wird ähnlich wie beim Kreuzungsabschnittstyp insbesondere durch seine Untertypen und einen aktuellen Ampelverkehr (Anzahl und Verhalten von Fremdfahrzeugen im Ampelbereich) vorgegeben. Für die Untertypen Rechtskurve oder Linkskurve kann der Kurvenradius berücksichtigt werden, um die Geschwindigkeit zu bestimmen, mit welcher gemäß des Referenz-Geschwindigkeits-Zeit-Verlaufs das Fahrzeug die Kreuzung durchfährt. Anhand der Ampelphasendauer kann die Zeitdauer bestimmt werden, während welcher das Fahrzeug gemäß dem Referenz-Geschwindigkeits-Zeit-Verlauf an der Ampel im Stillstand verharrt.
- Der Abschnittstyp "freie Fahrt":
   Dieser Abschnittstyp beschreibt einen Abschnitt der Fahrroute, auf welchem das Fahrzeug im Wesentlichen unbehindert beispielsweise von anderen Fahrzeugen (oder von Kreuzungen oder Ampelanlagen) fahren kann. Die Geschwindigkeit des Fahrzeugs auf einem Abschnitt dieses Abschnittstyps hängt dabei von der gültigen Höchstgeschwindigkeit ab, so dass der Referenz-Geschwindigkeits-Zeit-Verlauf insbesondere durch die gültige Höchstgeschwindigkeit definiert wird.
- Der Abschnittstyp Verkehr:
   Dieser Abschnittstyp beschreibt einen Abschnitt der Fahrroute, welcher zwar keine Kreuzungen oder Ampelanlagen aufweist, aber auf welchem das Fahrzeug durch andere Fahrzeuge behindert wird und daher die Geschwindigkeit des Fahrzeugs gemäß dem Referenz-Geschwindigkeits-Zeit-Verlauf beispielsweise von der Verkehrsdichte abhängt.

Es sei darauf hingewiesen, dass die vorab beschriebenen Abschnittstypen insbesondere derart definiert sind, dass die Fahrroute vollständig nur in Abschnitte unterteilt werden kann, welche jeweils einen dieser Abschnittstypen aufweisen. Anders ausgedrückt existiert kein Abschnitt der Fahrroute, welcher nicht einem dieser Abschnittstypen zugewiesen werden kann.

Vorteilhafterweise können beide erfindungsgemäße Verfahren umso bessere Ergebnisse liefern, desto mehr Abschnittstypen existieren, da dadurch entsprechende Besonderheiten der Fahrroute genauer abgebildet werden können.

Bei beiden erfindungsgemäßen Verfahren können folgende Parameter oder Typen von Parametern existieren:
- Offset-Geschwindigkeit
   Dieser Parameter definiert für den jeweiligen Abschnitt eine Abweichung von einer konstanten Geschwindigkeit innerhalb des Referenz-Geschwindigkeits-Zeit-Verlaufs. Beispielsweise beim Abschnitt des Abschnittstyps "freie Fahrt" kann dieser Parameter die Abweichung von der erlaubten Höchstgeschwindigkeit für den jeweiligen Fahrer angeben.
- Übergangsbeschleunigung
   Für einen innerhalb des Referenz-Geschwindigkeits-Zeit-Verlaufs vorhandenen Übergang von einer ersten Geschwindigkeit zu einer zweiten Geschwindigkeit des Fahrzeugs bestimmt dieser Parameter die insbesondere von dem Fahrer abhängige Beschleunigung, um das Fahrzeug von der ersten Geschwindigkeit in die zweite Geschwindigkeit zu beschleunigen. Dabei kann der Parameter bzw. die Übergangsbeschleunigung auch negative Werte annehmen, wenn die zweite Geschwindigkeit kleiner als die erste Geschwindigkeit ist oder beispielsweise 0 km/h beträgt.

Mit diesen beiden Parametern kann vorteilhafterweise zum einen das Brems- und Beschleunigungsverhalten des jeweiligen Fahrers sowie das Einhalten einer vorgegebenen Höchstgeschwindigkeit abgebildet werden, um so die Bestimmung der prognostizierten Längsführung zu optimieren.

Neben der Abhängigkeit von dem jeweiligen Fahrer oder der Abhängigkeit von dem jeweiligen Abschnittstyp können die Parameter auch von weiteren Informationen abhängig sein, welche im Folgenden aufgelistet sind:
- Eine Umweltbedingung, welche vorherrscht, wenn das Fahrzeug den jeweiligen Abschnitt der Fahrroute befährt.
   Diese Umweltbedingungen können beispielsweise eine Temperatur, eine Niederschlagsmenge pro Zeiteinheit, ein Maß einer Feuchtigkeit, Sichtbedingungen, eine Nebelbildung, eine Straßenklasse, eine Verkehrsdichte (z. B. ein Abstand von Fremdfahrzeugen vor/neben/hinter dem Fahrzeug oder eine Anzahl von überholenden/überholten Fremdfahrzeugen pro Zeiteinheit), eine Geschwindigkeitsbegrenzung (welche beispielsweise über eine mit einer Kamera erzielten Verkehrszeichenerkennung erfasst wird) und eine Art und Weise der umgebenden Landschaft umfassen. Mit anderen Worten sollen diese Umweltbedingungen, von welchen die Parameter abhängig sind, jegliche Bedingung der Umwelt umfassen, welche einen Einfluss auf die Längsführung des Fahrzeugs bei der Fahrt über den jeweiligen Abschnitt aufweist.
- Einen Zustand des Fahrers.
   Der Zustand des Fahrers kann beispielsweise aggressiv, müde, betrunken, erschöpft oder entspannt sein. Durch die Berücksichtigung des Zustands des Fahrers kann die prognostizierte Längsführung des Fahrzeugs noch besser vorausgesagt werden.
- Eine Fahrzeuginformation, welche das Fahrzeug und/oder einen Zustand des Fahrzeugs beschreibt. Eine solche Information umfasst beispielsweise das Fahrzeugmodell des Fahrzeugs, eine Fahrmoduswahl (z.B. sportlich oder ökonomisch bei einem Automatikgetriebe) und eine Infotainmenteinstellung. Die Zustände des Fahrzeugs umfassen beispielsweise die aktuelle Geschwindigkeit des Fahrzeugs, einen Gaspedalwinkel, ein Motordrehmoment, eine Motordrehzahl und einen Lenkwinkel des Fahrzeugs.
- Einen Fahrstil des Fahrers.
   Ein Fahrstil des Fahrers kann auch unabhängig von dem Zustand des Fahrers beispielsweise einen sportlichen Fahrstil oder einen defensiver Fahrstil umfassen.
- Eigenschaften des Fahrzeugs.
   Die Eigenschaften sind insbesondere vom Fahrzeugtyp abhängig und definieren beispielsweise den Fahrkomfort, die Motorisierung und den Energieverbrauch des Fahrzeugs pro Kilometer.
- Merkmale des Abschnitts.
   Die Merkmale des Abschnitts der Fahrroute betreffen insbesondere die Straßentopologie und beschreiben beispielsweise die Straßenklasse (z.B. Autobahn), die den Abschnitt umgebende Umgebung (z.B. Stadtgebiet oder Umland) und auf dem Abschnitt zu beachtende Verkehrsregeln (z.B. Geschwindigkeitsbegrenzung).
- Eine Tageszeit, zu welcher das Fahrzeug den jeweiligen Abschnitt der Fahrroute befährt.
   Die Parameter können auch abhängig von der Tageszeit sein, da sich der Fahrer beispielsweise am Morgen anders verhält als am Abend.
- Eine bestimmte Position auf der Fahrroute.
   Erfindungsgemäß können die Parameter bei einer bestimmten Position (beispielsweise der Position einer bestimmten Kreuzung) bestimmte, von der Position abhängige Werte aufweisen, wobei die Kreuzung über eine bestimmte Identifikation oder über den Ort (z.B. Längengrad und Breitengrad) definiert ist.

Bei einer bevorzugten erfindungsgemäßen Ausführungsform wird für zumindest eine der vorab beschriebenen Informationen ein Parametersatz erstellt, welcher die vorab beschriebenen Parameter umfasst. Besser ist es natürlich, wenn für mehrere Informationen oder für mehrere (am besten alle sinnvollen) Kombinationen der vorab beschriebenen Informationen jeweils ein Parametersatz bestimmt wird. In diesem Fall liegt für mehrere Kombinationen aus bestimmten Umweltbedingungen, Fahrzeuginformationen, einem Zustand des Fahrers und einem Fahrstil des Fahrers jeweils ein Parametersatz vor. Zur Bestimmung des voraussichtlichen Geschwindigkeits-Zeit-Verlaufs für den jeweiligen Abschnitt kann dann anhand des aktuellen Kontextes, das heißt anhand der erfassten Umweltbedingungen, Fahrzeuginformationen, Fahrerzustand und Fahrstil, der am besten passende Parametersatz eingesetzt werden.

Wie vorab beschrieben ist, ist es vorteilhaft, wenn für jeden Fahrer und jeden Abschnittstyp ein Parametersatz bestimmt wird. Daher wird gemäß der vorab beschriebenen Ausführungsform für mehrere Kombinationen aus Umweltbedingungen, Fahrzeuginformationen, einem Zustand des Fahrers, einem Fahrstil des Fahrers, einem Fahrer und einem Abschnittstyp jeweils ein Parametersatz erstellt. Das erfindungsgemäße Verfahren zur Bestimmung der prognostizierten Längsführung ermittelt die aktuellen Umweltbedingungen, die aktuellen Fahrzeuginformationen, den aktuellen Zustand des Fahrers, den aktuellen Fahrstil des Fahrers, den Fahrer und den Abschnittstyp des aktuell befahrenen Abschnitts der Fahrroute und bestimmt abhängig davon den entsprechenden Parametersatz, welcher dann eingesetzt wird, um die prognostizierte Längsführung zu bestimmen.

Im Folgenden soll das erfindungsgemäße Verfahren zur Bestimmung der prognostizierten Längsführung noch einmal aus einem anderen Blickwinkel erläutert werden. Das Verfahren setzt sich Wesentlichen aus drei Teilen Verfahren zusammen:
1. Aus unterschiedlichen Informationsquellen wird ein Fahrtkontext ermittelt. Dabei kann es sich bei den Informationsquellen zum einen um Fahrzeugsensoren und zum anderen um Empfangseinheiten handeln, über welche über das Internet oder eine Car2X-Kommunikation insbesondere Verkehrsinformationen oder Wetter Informationen erfasst werden. Der Fahrtkontext setzt sich im Wesentlichen aus Umweltbedingungen, Fahrzeuginformationen, Fahrerzustand und Fahrstil zusammen.
2. Während der Fahrt des Fahrzeugs wird anhand des Fahrerverhaltens (z.B. Beschleunigungsverhaltens) und des ermittelten Fahrtkontextes das fahrerspezifische und kontextbezogene Längsführungsverhalten erlernt, welches in Form der Parameter abgespeichert wird.
3. Vor oder während der Fahrt wird das gelernte Längsführungsverhalten jeweils für den auf zukünftigen Fahrroutenabschnitten geltenden Fahrtkontext angewendet, um so die Auswirkungen des spezifischen Fahrerverhaltens beispielsweise hinsichtlich Energieverbrauch des Fahrzeugs und Fahrtdauer vorherzusagen.

Im Rahmen der vorliegenden Erfindung wird auch ein System zur Bestimmung von Parametern eines Modells einer prognostizierten Längsführung eines Fahrzeugs bereitgestellt. Dabei umfasst das System Steuermittel, Speichermittel, um die Parameter und gegebenenfalls weitere Informationen zu speichern, und Sensoren des Fahrzeugs. Die weiteren Informationen umfassen beispielsweise Informationen, von denen die Parameter abhängig sind, wie z.B. Umweltbedingungen, einen Zustand des Fahrers, Fahrzeuginformationen, einen Fahrstil des Fahrers, Eigenschaften des Fahrzeugs, Straßenmerkmale, die Uhrzeit und eine aktuelle Position. Das System ist ausgestaltet, um mit Hilfe der Sensoren einen Abschnitt einer Fahrroute des Fahrzeugs zu erfassen, um anschließend einen tatsächlichen Geschwindigkeits-Zeit-Verlauf des Fahrzeugs beim Durchfahren des Abschnitts zu erfassen und um abhängig von dem tatsächlichen Geschwindigkeits-Zeit-Verlauf die Parameter zu bestimmen. Dabei weist der Abschnitt einen vorbestimmten Abschnittstyp und einen Referenz-Geschwindigkeits-Zeit-Verlauf auf, welcher von dem Abschnittstyp abhängig ist. Mit den Parametern, welche insbesondere auch abhängig von den vorab beschriebenen weiteren Informationen sein können, kann ausgehend von dem Referenz-Geschwindigkeits-Zeit-Verlauf ein voraussichtlicher Geschwindigkeits-Zeit-Verlauf für einen dem Abschnittstyp entsprechenden Abschnitt der Fahrroute bestimmt werden.

Darüber hinaus wird im Rahmen der vorliegenden Erfindung ein weiteres System zur Bestimmung einer prognostizierten Längsführung für ein Fahrzeug bereitgestellt. Dabei umfasst das weitere System Steuermittel, eine Eingabevorrichtung zur Vorgabe einer Fahrroute des Fahrzeugs und eine Ausgabevorrichtung, um die Längsführung auszugeben. Die Fahrroute verläuft von einer aktuellen Position des Fahrzeugs bis zu einer Zielposition der Fahrroute. Das weitere System ist ausgestaltet, um mit Hilfe der Steuermittel die Fahrroute in Abschnitte zu unterteilen, wobei jeder Abschnitt einem vorbestimmten Abschnittstyp zugeordnet ist. Darüber hinaus ist jedem Abschnitt ein Referenz-Geschwindigkeits-Zeit-Verlauf zugeordnet, welcher von dem Abschnittstyp des jeweiligen Abschnitts abhängt. Das weitere System ist ausgestaltet, um mit Hilfe der Steuermittel einen voraussichtlichen Geschwindigkeits-Zeit-Verlauf für jeden Abschnitt zu bestimmen, indem die Steuermittel den Referenz-Geschwindigkeits-Zeit-Verlauf des jeweiligen Abschnitts mit Parametern, welche von einem aktuellen Fahrer abhängig sind oder für den aktuellen Fahrer gelernt worden sind, beaufschlagt, um dadurch den voraussichtlichen Geschwindigkeits-Zeit-Verlauf des jeweiligen Abschnitt zu bestimmen. Das weitere System ist weiter ausgestaltet, um mittels der Steuermittel die Längsführung mittels der voraussichtlichen Geschwindigkeits-Zeit-Verläufe der (insbesondere aller) Abschnitte der Fahrroute zu bestimmen.

Die Vorteile des erfindungsgemäßen Systems und des weiteren erfindungsgemäßen Systems entsprechen im Wesentlichen den Vorteilen der vorab beschriebenen erfindungsgemäßen Verfahren, welche vorab im Detail ausgeführt worden sind, so dass hier auf eine Wiederholung verzichtet wird.

Schließlich wird im Rahmen der vorliegenden Erfindung ein Fahrzeug bereitgestellt, welches ein erfindungsgemäßes System und/oder ein weiteres erfindungsgemäßes System umfasst.

Durch die Bestimmung der Parameter des Modells der prognostizierten Längsführung des Fahrzeugs wird quasi eine fahrerspezifische Fahrzeuglängsführung modelliert, was Teil einer umfassenden, komplexen Fahrermodellierung sein kann. Da die Längsführung des Fahrzeugs beispielsweise den Antriebstrang des Fahrzeugs und den Energieverbrauch des Fahrzeugs, aber auch beispielsweise die Fahrzeit des Fahrzeugs entlang einer Fahrroute maßgeblich beeinflusst, können mit der vorliegenden Erfindung Steuerungen des Antriebsstrangs, eine Optimierung des Energieverbrauchs des Fahrzeugs und eine Bestimmung der Fahrzeit zur Bewältigung einer vorgegebenen Fahrroute des Fahrzeugs vorteilhafterweise verbessert werden.

Darüber hinaus kann die vorliegende Erfindung zur Erstellung eines Fahrermodells zur Anwendung beim automatischen Fahren des Fahrzeugs, bei der Verkehrssimulation zur Nachbildung eines realen Verkehrs oder zur Reichweitenvorhersage eingesetzt werden.

Die vorliegende Erfindung ermöglicht eine effiziente Speicherung der zur Bestimmung der prognostizierten Längsführung notwendigen Informationen (insbesondere Parameter und Referenz-Geschwindigkeits-Zeit-Verlauf) sowie eine recheneffiziente Verarbeitung dieser Informationen und ermöglicht dennoch eine hohe Genauigkeit der prognostizierten Längsführung. Das erfindungsgemäße Modell erlaubt, dass es leicht während der Fahrt erlernt und/oder adaptiert wird. Darüber hinaus kann die vorliegende Erfindung vorteilhafterweise einfach auf zusätzliche Kontextdimensionen (zusätzliche Umweltbedingungen oder Fahrzeuginformationen) erweitert werden.

Die vorliegende Erfindung ermöglicht, dass Längsführungsverhalten adaptiv während der Fahrt zu erlernen und das Gelernte effizient anzuwenden, um die Längsführung des Fahrzeugs sehr genau vorherzusagen.

Die vorliegende Erfindung kann insbesondere bei Kraftfahrzeugen eingesetzt werden. Selbstverständlich ist die vorliegende Erfindung nicht auf diesen bevorzugten Anwendungsbereich beschränkt, da die vorliegende Erfindung auch bei Schiffen, Flugzeugen sowie gleisgebundenen oder spurgeführten Fahrzeugen einsetzbar ist. Darüber hinaus kann die vorliegende Erfindung auch außerhalb eines Fortbewegungsmittels beispielsweise zur Verkehrsplanung eingesetzt werden.

Im Folgenden wird die vorliegende Erfindung anhand bevorzugter erfindungsgemäßer Ausführungsformen mit Bezug zu den Figuren im Detail beschrieben.

In Fig. 1 sind schematisch Komponenten eines erfindungsgemäßen Fahrzeugs dargestellt.

In Fig. 2 ist ein Ablaufplan eines erfindungsgemäßen Verfahrens zur Bestimmung einer prognostizierten Längsführung dargestellt.

In Fig. 3 ist eine Kreuzung mit Lichtanlage dargestellt, um die vorliegende Erfindung zu erläutern.

In Fig. 4 sind Referenz-Geschwindigkeits-Zeit-Verläufe und tatsächliche Geschwindigkeits-Zeit-Verläufe für zwei verschiedene Abschnittstypen dargestellt.

In Fig. 5 sind verschiedene Parameter zur Beschreibung einer Übergangsbeschleunigung dargestellt.

In Fig. 6 sind verschiedene Parameter zur Beschreibung einer Offset-Geschwindigkeit dargestellt.

In Fig. 7 ist ein voraussichtlicher Geschwindigkeits-Zeit-Verlauf einem tatsächlichen Geschwindigkeits-Zeit-Verlauf gegenübergestellt.

Fig. 8 zeigt ein erfindungsgemäßes Fahrzeug mit einem erfindungsgemäßen System.

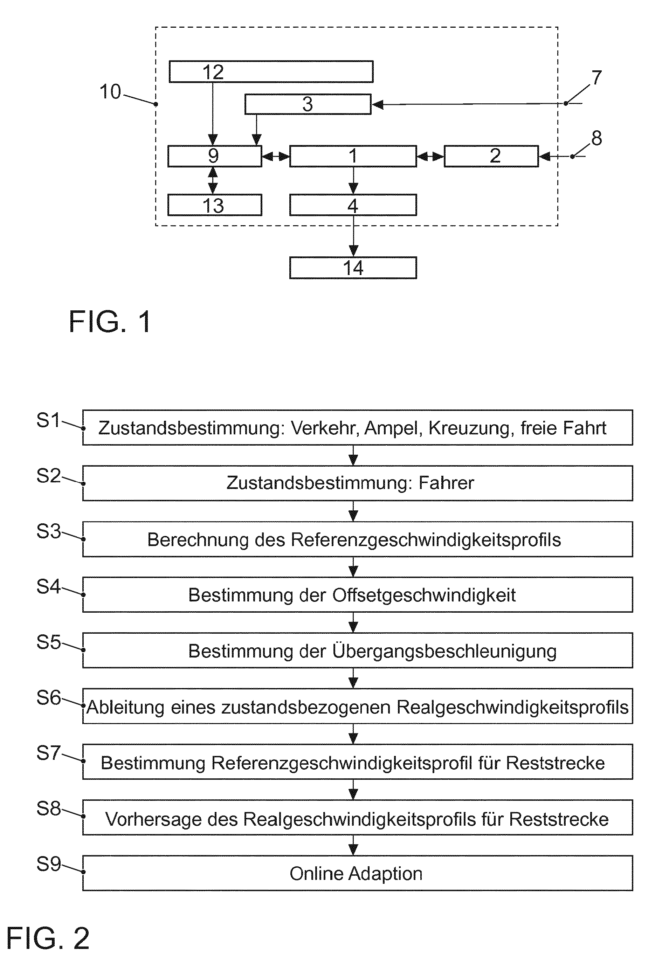

In Fig. 1 ist schematisch ein erfindungsgemäßes Fahrzeug 10 und ein Fahrer des Fahrzeugs 14 dargestellt. Mit Umfeldsensoren 3, welche beispielsweise lasergestützt sind, wird ein dynamisches Umfeld 7 des Fahrzeugs 10 erfasst. Dabei umfasst das dynamische Umfeld 7 beispielsweise den Fahrzeugverkehr um das Fahrzeug 10 herum, was vorausfahrende und seitlich fahrende Fahrzeuge einschließt. Darüber hinaus umfasst das dynamische Umfeld 7 den Zustand einer Straßenkreuzung mit oder ohne Lichtsignalanlage und eine dynamische Geschwindigkeitsbegrenzung (beispielsweise verursacht von einer Wanderbaustelle). Mit einer Empfangseinheit 2 kann das statische Umfeld 8 des Fahrzeugs 10, aber auch dynamische Umfeldinformationen beispielsweise mittels Car2-X-Kommunikation erfasst werden. Das statische Umfeld umfasst dabei Informationen über Kurven der Fahrroute, eine Topographie der Fahrroute, statische Geschwindigkeitsbegrenzungen auf der Fahrroute, eine Anzahl von Fahrspuren und die Straßenklasse von Abschnitten der Fahrroute, wobei die Straßenklasse insbesondere den Fahrbahnbelag, die Breite der Straße und die Beschaffenheit der Straße im Allgemeinen beschreibt.

Über Sensoren 12 zum Erfassen interner Fahrzeugzustände können beispielsweise der Ladezustand eines Energiespeichers, der Energieverbrauch einer Klimaanlage des Fahrzeugs 10, die Motordrehzahl oder andere Fahrzeuginformationen erfasst werden. In einem Datenspeicher 9 des Fahrzeugs 10 werden die von den Sensoren 3, 12 und von der Empfangseinheit 2 erfassten Informationen zusammen mit Parametern zur Bestimmung der prognostizierten Längsführung des Fahrzeugs gespeichert. Auch Teile einer digitalen Straßenkarte 13 können in dem Speicher 9 gespeichert sein. Anhand dieser gespeicherten Informationen und der Parameter sowie abhängig von Daten einer digitalen Straßenkarte 13 wird mit Hilfe einer Recheneinheit 1 des Fahrzeugs 10 eine prognostizierte Längsführung des Fahrzeugs 10 bestimmt und beispielsweise eine davon abgeleitete Fahrzeit über eine Anzeigeeinheit 4 des Fahrzeugs 10 dem Fahrer 14 angezeigt.

In Fig. 2 ist ein Flussplan eines erfindungsgemäßen Verfahrens zur Bestimmung der prognostizierten Längsführung des Fahrzeugs 10 dargestellt.

In einem ersten Schritt S1 wird der aktuelle Fahrzustand ermittelt, indem ein aktueller Abschnitt der Fahrroute des Fahrzeugs erfasst wird. Mit anderen Worten wird im Schritt S1 beispielsweise mit Hilfe eines GPS-Empfängers oder mittels Odometrie die aktuelle Position des Fahrzeugs 10 und damit der aktuell von dem Fahrzeug 10 befahrene Abschnitt der Fahrroute bestimmt. Ein solcher Abschnitt weist einen Abschnittstyp auf, welcher bei dem dargestellten Beispiel vom Typ Verkehr, Ampel, Kreuzung oder freie Fahrt sein kann.

Im zweiten Schritt S2 wird der Zustand des Fahrers beispielsweise über eine im Innenraum des Fahrzeugs 10 befindliche Kamera bestimmt.

Im dritten Schritt S3 wird für den aktuellen Abschnitt das Referenzgeschwindigkeitsprofil bzw. der Referenz-Geschwindigkeits-Zeit-Verlauf anhand des Abschnittstyps, welchem der aktuelle Abschnitt zugeordnet wird, bestimmt.

Anhand des tatsächlichen Geschwindigkeits-Zeit-Verlaufs, welcher beim Durchfahren des aktuellen Abschnitts erfasst wird, wird im Schritt S4 die Offsetgeschwindigkeit und im Schritt S5 die Übergangsbeschleunigung bestimmt, aus welchen dann im folgenden Schritt S6 ein zustandsbezogenes Realgeschwindigkeitsprofil abgeleitet wird. Genauer gesagt werden im Schritt S6 anhand der bestimmten Offsetgeschwindigkeit und Übergangsbeschleunigung diejenigen Parameter bestimmt oder angepasst, mit welchen ausgehend von dem Referenz-Geschwindigkeits-Zeit-Verlauf ein voraussichtlicher Geschwindigkeits-Zeit-Verlauf bestimmt werden kann.

Im anschließenden Schritt S7 werden für die Reststrecke, d.h. für die Fahrroute von der aktuellen Position des Fahrzeugs 10 bis zu einer vorbestimmten Zielposition, die Abschnitte und die zu dem jeweiligen Abschnitt gehörenden Abschnittstypen bestimmt, abhängig von denen dann die Referenz-Geschwindigkeits-Zeit-Verläufe aller Abschnitte der Fahrroute bzw. Reststrecke bestimmt werden können. Mit anderen Worten wird im Schritt S7 ein Referenzgeschwindigkeitsprofil der Reststrecke, welches sich quasi aus den aneinandergereihten Referenz-Geschwindigkeits-Zeit-Verläufen zusammensetzt, bestimmt.

Mit den im Schritt S6 bestimmten oder angepassten Parametern wird dann ausgehend von diesem Referenzgeschwindigkeitsprofil oder den Referenz-Geschwindigkeits-Zeit-Verläufen aller Abschnitte im Schritt S8 die voraussichtlichen Geschwindigkeits-Zeit-Verläufe aller Abschnitte der Fahrroute bestimmt, was einer Vorhersage eines (voraussichtlichen) Realgeschwindigkeitsprofils der Reststrecke entspricht. Aus diesem Realgeschwindigkeitsprofil der Reststrecke kann dann beispielsweise die voraussichtliche Fahrzeit für die Reststrecke bzw. Fahrroute berechnet werden.

Im Schritt S9 erfolgt quasi online eine Adaption oder Anpassung der voraussichtlichen Geschwindigkeits-Zeit-Verläufe, indem insbesondere für jeden aktuell befahrenen Abschnitt der Fahrroute durch die entsprechende Bestimmung der Offsetgeschwindigkeit und Übergangsbeschleunigung die entsprechenden Parameter angepasst werden.

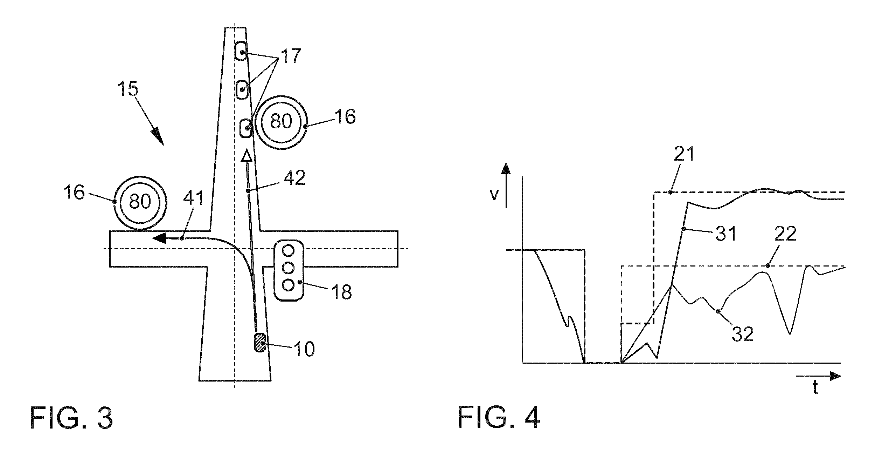

Mit den Figuren 3 und 4 soll die vorliegende Erfindung im Detail erläutert werden. Dabei zeigt die Fig. 3 eine Kreuzung 15 mit einer Lichtsignalanlage 18. Mit dem Bezugszeichen 41 ist ein Abschnitt der Fahrroute gekennzeichnet, welcher vom Ampelabschnittstyp und vom Untertyp Linkskurve ist. Dagegen ist mit dem Bezugszeichen 42 ein Abschnitt der Fahrroute gekennzeichnet, welcher ebenfalls vom Ampelabschnittstyp, aber diesmal vom Untertyp Geradeausfahrt ist. Bei beiden Abschnitten 41, 42 existiert nach der Kreuzung 15 ein Straßenabschnitt mit einer Geschwindigkeitsbegrenzung 16 von 80 km/h. Während allerdings auf dem Abschnitt nach der Linkskurve 41 ein Abschnitt vom Abschnittstyp "freie Fahrt" folgt, folgt dem Abschnitt 42 ein Abschnitt vom Abschnittstyp "Verkehr", da sich auf diesem Abschnitt Fremdfahrzeuge 17 befinden.

In Fig. 4 sind zum einen die Referenz-Geschwindigkeits-Zeit-Verläufe 21, 22, welche zumindest teilweise mit den Abschnitten 41, 42 korrespondieren, und zum anderen die dazugehörenden tatsächlichen Geschwindigkeits-Zeit-Verläufe 31, 32 dargestellt.

Der Referenz-Geschwindigkeits-Zeit-Verlauf 21 setzt sich aus einem Referenz-Geschwindigkeits-Zeit-Verlauf des Ampelabschnitts 41 und einem Referenz-Geschwindigkeits-Zeit-Verlauf eines anschließenden Abschnitts vom Abschnittstyp "freie Fahrt" zusammen. Man erkennt, dass der Referenz-Geschwindigkeits-Zeit-Verlauf des Ampelabschnitts 41 davon ausgeht, dass sich das Fahrzeug mit einer Geschwindigkeit von 50 km/h der Ampel 18 nähert, wobei das Fahrzeug 10 dann an der Ampel 18 für eine bestimmte Zeitspanne stehenbleibt. Nachdem die Ampel 18 auf Grün geschaltet hat, durchfährt das Fahrzeug 10 mit einer angenommenen Geschwindigkeit von 15 km/h die Linkskurve. Der sich an den Referenz-Geschwindigkeits-Zeit-Verlauf des Ampelabschnitts 41 anschließende Referenz-Geschwindigkeits-Zeit-Verlauf des Abschnitts "freie Fahrt" geht davon aus, dass sich das Fahrzeug 10 mit einer Geschwindigkeit von 80 km/h bewegt, was der angegebenen Höchstgeschwindigkeit 16 entspricht.

Vergleicht man den Referenz-Geschwindigkeits-Zeit-Verlauf 21 mit dem tatsächlichen Geschwindigkeits-Zeit-Verlauf 31, stellt man fest, dass die Geschwindigkeit des Fahrzeugs 10 vor der Ampel ungefähr 50 km/h beträgt, dass die Geschwindigkeit des Fahrzeugs 10 beim Durchfahren der Linkskurve im Durchschnitt ungefähr 5 km/h beträgt und dass die Geschwindigkeit des Fahrzeugs 10 innerhalb des Abschnitts "freie Fahrt" ungefähr 80 km/h beträgt. Demnach könnte aus diesem Beispiel die Offset-Geschwindigkeit vor der Ampel 18 mit 0 km/h, beim Durchfahren der Linkskurve mit -10 km/h und für den Abschnitt "freie Fahrt" wiederum mit 0 km/h abgeleitet werden. In ähnlicher Weise könnten aus dem tatsächlichen Geschwindigkeits-Zeit-Verlauf 31 Übergangsbeschleunigungen abgeleitet werden, welche beschreiben, wie das Fahrzeug 10 vor der Ampel 18 zum Stillstand kommt und mit welcher Beschleunigung das Fahrzeug 10 aus dem Stillstand zum Durchfahren der Linkskurve und nach dem Durchfahren der Linkskurve beschleunigt.

Der Referenz-Geschwindigkeits-Zeit-Verlauf 22 setzt sich zum einen aus dem Referenz-Geschwindigkeits-Zeit-Verlauf für den Ampelabschnitt 42 und zum anderen aus dem Referenz-Geschwindigkeits-Zeit-Verlauf für den anschließenden Abschnitt Verkehr zusammen. Man erkennt, dass der Referenz-Geschwindigkeits-Zeit-Verlauf 22 bis zum Umschalten der Ampel 18 auf Grün dem Referenz-Geschwindigkeits-Zeit-Verlauf 21 entspricht. Nach dem Umschalten der Ampel 18 auf Grün geht der Referenz-Geschwindigkeits-Zeit-Verlauf 22 davon aus, dass sich das Fahrzeug 10 aufgrund der Fremdfahrzeuge 17 mit einer Geschwindigkeit von 40 km/h bewegt.

Vergleicht man den tatsächlichen Geschwindigkeits-Zeit-Verlauf 32 mit dem Referenz-Geschwindigkeits-Zeit-Verlauf 22, gelten bis zum Umschalten der Ampel 18 auf Grün dieselben Überlegungen wie bei dem Referenz-Geschwindigkeits-Zeit-Verlauf 21. Die tatsächliche Geschwindigkeit im Abschnitt Verkehr beträgt allerdings nur durchschnittlich 30 km/h, so dass sich eine Offset-Geschwindigkeit von -10 km/h ergibt. Wiederum können aus dem tatsächlichen Geschwindigkeits-Zeit-Verlauf 32 Übergangsbeschleunigungen abgeleitet werden, wie es vorab bereits beschrieben ist.

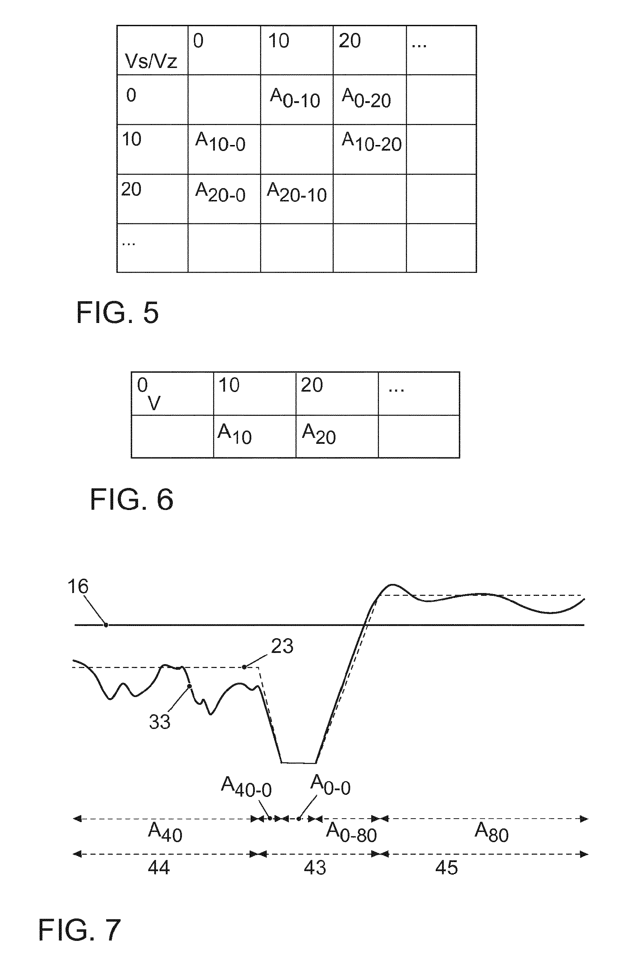

In der in Fig. 5 dargestellten Tabelle werden für einen bestimmten Kontext, welcher sich beispielsweise aus einer Kombination von Umweltzuständen, Fahrerinformationen, Fahrerzustand und Fahrer definiert, Übergangsbeschleunigungen abgespeichert, welche vorher durch die Auswertung entsprechender tatsächlicher Geschwindigkeits-Zeit-Verläufe bestimmt wurden. Dabei werden in der dargestellten Tabelle für bestimmte Geschwindigkeitsübergänge von einer Startgeschwindigkeit Vs zu einer Zielgeschwindigkeit Vz die entsprechenden Übergangsbeschleunigungen A_{x-y} abgespeichert. Beispielsweise gibt der Parameter A₁₀₋₂₀ an, mit welcher Beschleunigung das Fahrzeug in dem bestimmten Kontext von 10 km/h auf 20 km/h beschleunigt. In ähnlicher Weise gibt der Parameter A₂₀₋₀ an, mit welcher negativen Beschleunigung das Fahrzeug in dem bestimmten Kontext von einer Geschwindigkeit von 20 km/h in den Stillstand abgebremst.

In der in Fig. 6 dargestellten Tabelle werden wiederum für einen bestimmten Kontext Offset-Geschwindigkeiten abgespeichert, welche vorher für bestimmte Geschwindigkeits-Zeit-Verläufe bestimmt wurden. Dabei geben die Parameter A₁₀, A₂₀ für den bestimmten Kontext an, um wie viel das Fahrzeug 10 auf einem Abschnitt mit nach Referenz-Geschwindigkeits-Zeit-Verlauf konstanter Geschwindigkeit von dieser Geschwindigkeit abweicht. Beispielsweise gibt der Parameter A₁₀ an, um wie viel das Fahrzeug 10 beispielsweise auf einem Abschnitt, welcher nach Referenz-Geschwindigkeits-Zeit-Verlauf mit einer konstanten Geschwindigkeit von 10 km/h durchfahren wird, voraussichtlich von dieser Geschwindigkeit abweichen wird.

In Fig. 7 ist ein voraussichtlicher Geschwindigkeits-Zeit-Verlauf 23 dargestellt, welcher sich aus einem voraussichtlichen Geschwindigkeits-Zeit-Verlauf für einen Abschnitt 44 vom Abschnittstyp Verkehr, aus einem voraussichtlichen Geschwindigkeits-Zeit-Verlauf für einen Abschnitt 43 vom Abschnittstyp Ampel und aus einem voraussichtlichen Geschwindigkeits-Zeit-Verlauf für einen Abschnitt 45 vom Abschnittstyp "freie Fahrt" zusammensetzt. Dabei gilt auf allen Abschnitten 43-45 eine Geschwindigkeitsbegrenzung 16.

Zur Bestimmung des voraussichtlichen Geschwindigkeits-Zeit-Verlaufs für den Abschnitt 44 wurde der zugehörige Referenz-Geschwindigkeits-Zeit-Verlauf des Abschnittstyps Verkehr mit dem Parameter A₄₀ an den aktuellen Kontext angepasst. Dazu wird zu der Geschwindigkeit von 40 km/h, welche für den Abschnitt 44 von dem zugehörigen Referenz-Geschwindigkeits-Zeit-Verlauf vorgeschrieben ist, der Parameter A₄₀ addiert, um die für den Abschnitt 44 geltende Geschwindigkeit gemäß dem voraussichtlichen Geschwindigkeits-Zeit-Verlauf 23, wie sie in Fig. 7 dargestellt ist, zu ermitteln. In ähnlicher Weise wird zu der Geschwindigkeit von 80 km/h, welche für den Abschnitt 45 von dem zugehörigen Referenz-Geschwindigkeits-Zeit-Verlauf vorgeschrieben ist, der Parameter A₈₀ addiert, um die für den Abschnitt 45 geltende Geschwindigkeit gemäß dem voraussichtlichen Geschwindigkeits-Zeit-Verlauf 23 zu ermitteln. Der Parameter A₄₀₋₀ gibt die Übergangsbeschleunigung für den aktuellen Kontext an, um von der gemäß dem zugehörigen Referenz-Geschwindigkeits-Zeit-Verlauf vorgegebenen Geschwindigkeit von 40 km/h in den ebenfalls gemäß dem zugehörigen Referenz-Geschwindigkeits-Zeit-Verlauf vorgegebenen Stillstand abzubremsen. In ähnlicher Weise gibt der Parameter A₀₋₈₀ die Übergangsbeschleunigung für den aktuellen Kontext an, um von der gemäß dem zugehörigen Referenz-Geschwindigkeits-Zeit-Verlauf vorgegebenen Stillstand beim Umschalten der Ampel in die ebenfalls gemäß dem zugehörigen Referenz-Geschwindigkeits-Zeit-Verlauf vorgegebenen Geschwindigkeit von 80 km/h zu beschleunigen. Mit anderen Worten werden die sprunghaften Übergänge in den Referenz-Geschwindigkeits-Zeit-Verläufen 21, 22 (siehe beispielsweise Fig. 4) durch die Parameter A₄₀₋₀, A₀₋₈₀, welche jeweils eine Übergangsbeschleunigung repräsentieren, in die schräg und geradlinig verlaufenden Übergänge des voraussichtlichen Geschwindigkeits-Zeit-Verlaufs 23 umgesetzt.

Zusätzlich ist in Fig. 7 der tatsächliche Geschwindigkeits-Zeit-Verlauf 33 eingezeichnet, welcher zeigt, dass der voraussichtliche Geschwindigkeits-Zeit-Verlauf 23 der Realität (d.h. dem tatsächlichen Geschwindigkeits-Zeit-Verlauf 33) bereits sehr nahe kommt.

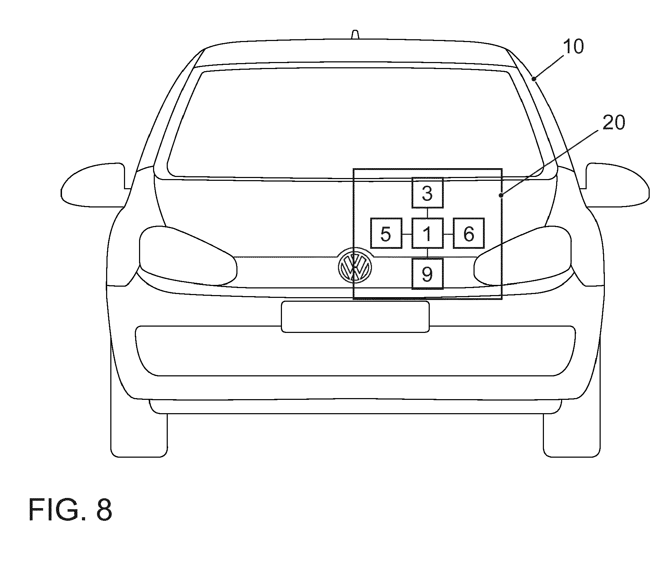

Schließlich ist in Fig. 8 ein erfindungsgemäßes Fahrzeug 10 mit einem erfindungsgemäßen System 20 dargestellt, welches zum einen zur Bestimmung von Parametern eines Modells einer prognostizierten Längsführung des Fahrzeugs 10 und zum anderen zur Bestimmung der prognostizierten Längsführung selbst ausgestaltet ist. Das System umfasst neben einer Recheneinheit 1, Umfeldsensoren 3 (insbesondere einen GPS-Empfänger), eine Eingabevorrichtung 5, eine Ausgabevorrichtung 6 und einen Speicher 9. Über die Eingabevorrichtung 5 kann beispielsweise der Fahrer des Fahrzeugs 10 das Ziel der Fahrroute vorgegeben. In dem Speicher 9 werden die abhängig von dem aktuellen Kontext an das Fahrverhalten angepassten Parameter abgespeichert. Über die Ausgabevorrichtung 6 kann beispielsweise eine voraussichtliche Fahrtdauer zur Bewältigung einer Fahrroute von der aktuellen Position des Fahrzeugs 10 zu dem vorgegebenen Ziel ausgegeben werden.

### Bezugszeichenliste

- 1: Recheneinheit
- 2: Empfangseinheit
- 3: Umfeldsensoren
- 4: Anzeigeeinheit
- 5: Eingabevorrichtung
- 6: Ausgabevorrichtung
- 7: dynamisches Umfeld
- 8: statisches Umfeld
- 9: Speicher
- 10: Fahrzeug
- 12: Sensoren interner Fahrzeugzustände
- 13: Straßenkarte
- 14: Fahrer
- 15: Kreuzung
- 16: Geschwindigkeitsbegrenzung
- 17: Fremdfahrzeug
- 18: Lichtsignalanlage bzw. Ampel
- 20: System
- 21,22: Referenz-Geschwindigkeits-Zeit-Verlauf
- 23: voraussichtlicher Geschwindigkeits-Zeit-Verlauf
- 31-33: tatsächlicher Geschwindigkeits-Zeit-Verlauf
- 41,42: Ampelabschnitt
- 43: Ampelabschnitt
- 44: Abschnitt mit Verkehr
- 45: Abschnitt mit freier Fahrt
- Aₓ,A_{x-y}: Parameter
- S₁-S₉: Verfahrensschritt

## Patentansprüche

1. Verfahren zur Bestimmung von Parametern (Aₓ, A_{x-y}) eines Modells einer prognostizierten Längsführung eines Fahrzeugs (10), wobei das Verfahren folgende Schritte umfasst:
Erfassen eines Abschnitts einer Fahrroute des Fahrzeugs (10) mit Hilfe von Sensoren (3) des Fahrzeugs (10),
Erfassen eines tatsächlichen Geschwindigkeits-Zeit-Verlaufs (31-33) des Fahrzeugs (10) beim Durchfahren des Abschnitts, und
Bestimmen der Parameter (Aₓ, A_{x-y}) abhängig von dem tatsächlichen Geschwindigkeits-Zeit-Verlauf (31-33),
wobei dem Abschnitt ein vorbestimmter Abschnittstyp und ein Referenz-Geschwindigkeits-Zeit-Verlauf (21; 22) zugewiesen ist, welcher von dem Abschnittstyp abhängig ist, und
wobei mit den Parametern (Aₓ, A_{x-y}) ausgehend von dem Referenz-Geschwindigkeits-Zeit-Verlauf (21; 22) ein voraussichtlicher Geschwindigkeits-Zeit-Verlauf (23) bestimmbar ist.

2. Verfahren nach Anspruch 1, **dadurch gekennzeichnet, dass** die Parameter (Aₓ, A_{x-y}) von einem Fahrer des Fahrzeugs (10) und/oder von dem Abschnittstyp abhängig sind.

3. Verfahren zur Bestimmung einer prognostizierten Längsführung für ein Fahrzeug (10), wobei das Verfahren folgende Schritte umfasst:
Bestimmen einer Fahrroute des Fahrzeugs (10), wobei die Fahrroute von einer aktuellen Position des Fahrzeugs (10) bis zu einer Zielposition der Fahrroute verläuft,
Unterteilen der Fahrroute in Abschnitte (41-45), wobei jeder der Abschnitte (41-45) einem vorbestimmten Abschnittstyp zugeordnet wird, wobei jedem Abschnitt (41-45) ein Referenz-Geschwindigkeits-Zeit-Verlauf (21; 22) zugeordnet ist, welcher von dem Abschnittstyp des jeweiligen Abschnitts (41-45) abhängig ist,
Bestimmen eines voraussichtlichen Geschwindigkeits-Zeit-Verlaufs (23) für jeden der Abschnitte (41-45), indem der Referenz-Geschwindigkeits-Zeit-Verlauf (21; 22) des jeweiligen Abschnitts (41-45) mit Parametern (Aₓ, A_{x-y}), welche von einem aktuellen Fahrer abhängig sind, beaufschlagt wird, um den voraussichtlichen Geschwindigkeits-Zeit-Verlauf (23) des jeweiligen Abschnitts (41-45) zu bestimmen, und
Bestimmen der Längsführung mittels der voraussichtlichen Geschwindigkeits-Zeit-Verläufe (23) der Abschnitte (41-45) der Fahrroute.

4. Verfahren nach Anspruch 3, **dadurch gekennzeichnet, dass** die Parameter von dem Abschnittstyp abhängig sind.

5. Verfahren nach Anspruch 3 oder 4, **dadurch gekennzeichnet, dass** das Bestimmen des voraussichtlichen Geschwindigkeits-Zeit-Verlaufs (23) folgende Schritte umfasst:
Erfassen eines aktuellen Abschnitts der Fahrroute des Fahrzeugs (10) mit Hilfe von Sensoren (2, 3) des Fahrzeugs (10),
Erfassen eines tatsächlichen Geschwindigkeits-Zeit-Verlaufs (31-33) des Fahrzeugs (10) beim Durchfahren des aktuellen Abschnitts, und
Anpassen der Parameter (Aₓ, A_{x-y}) abhängig von dem tatsächlichen Geschwindigkeits-Zeit-Verlauf (31-33).

6. Verfahren nach einem der vorhergehenden Ansprüche, **dadurch gekennzeichnet, dass** die Abschnittstypen mindestens einen aus einer Abschnittstypengruppe umfassen, wobei die Abschnittstypengruppe umfasst:
• einen Ampelabschnittstyp,
• einen Kreuzungsabschnittstyp,
• einen Abschnittstyp, welcher einen Abschnitt (45) repräsentiert, auf welchem das Fahrzeug (10) frei fahren kann, und
• einen Abschnittstyp, welcher einen Abschnitt (44) repräsentiert, auf welchem das Fahrzeug (10) von anderen Fahrzeugen (17) behindert wird.

7. Verfahren nach einem der vorhergehenden Ansprüche, **dadurch gekennzeichnet, dass** die Parameter mindestens einen Parameter aus einer Parametergruppe umfassen, wobei die Parametergruppe umfasst:
eine Offset-Geschwindigkeit (Aₓ), welche für den jeweiligen Abschnitt (45) eine Abweichung von einer konstanten Geschwindigkeit innerhalb des Referenz-Geschwindigkeits-Zeit-Verlaufs (21, 22) des jeweiligen Abschnitts (45) angibt, und
eine Übergangsbeschleunigung (A_{x-y}), welche für den jeweiligen Abschnitt (43) eine Beschleunigung angibt, um innerhalb des jeweiligen Abschnitts (43) von einer ersten bestimmten Geschwindigkeit des Fahrzeugs (10) zu einer zweiten bestimmten Geschwindigkeit des Fahrzeugs (10) zu beschleunigen.

8. Verfahren nach einem der vorhergehenden Ansprüche, **dadurch gekennzeichnet, dass** die Parameter (Aₓ, A_{x-y}) abhängig von zumindest einer Information aus einer Informationsgruppe bestimmt werden, wobei die Informationsgruppe umfasst:
• eine Umweltbedingung, welche vorherrscht, wenn das Fahrzeug (10) den jeweiligen Abschnitt (41-45) befährt,
• einen Zustand des Fahrers (14),
• eine Fahrzeuginformation, welche das Fahrzeug (10) und/oder einen Zustand des Fahrzeugs (10) beschreibt,
• einen Fahrstil des Fahrers (14),
• Eigenschaften des Fahrzeugs (10),
• Merkmale des Abschnitts (41-45),
• eine Tageszeit, zu welchem das Fahrzeug (10) den jeweiligen Abschnitt (41-45) befährt, und
• eine bestimmte Position auf der Fahrroute.

9. Verfahren nach Anspruch 8,
**dadurch gekennzeichnet,**
**dass** für mehrere Abschnittstyp jeweils mehrere Parametersätze vorliegen, wobei jeder der Parametersätze die Parameter (Aₓ, A_{x-y}) umfasst, um für den jeweiligen Abschnitt (41-45) ausgehend von dem Referenz-Geschwindigkeits-Zeit-Verlauf (21, 22) den voraussichtlichen Geschwindigkeits-Zeit-Verlauf (23) zu bestimmen, und
**dass** jeweils einer dieser Parametersätze für zumindest eine Information oder für zumindest eine Kombination der Informationen aus der Informationsgruppe erstellt wird.

10. System zur Bestimmung von Parametern (Aₓ, A_{x-y}) eines Modells einer prognostizierten Längsführung eines Fahrzeugs (10),
wobei das System (20) Steuermittel (1), Speichermittel (7) zum Speichern der Parameter (Aₓ, A_{x-y}) und Sensoren (3) des Fahrzeugs (10) umfasst,
wobei das System (20) ausgestaltet ist, um mittels der Sensoren (3) einen Abschnitt einer Fahrroute des Fahrzeugs (10) zu erfassen, um einen tatsächlichen Geschwindigkeits-Zeit-Verlauf (31-33) des Fahrzeugs (10) beim Durchfahren des Abschnitts zu erfassen und um abhängig von dem tatsächlichen Geschwindigkeits-Zeit-Verlauf (31-33) die Parameter (Aₓ, A_{x-y}) zu bestimmen,
wobei der Abschnitt einem vorbestimmten Abschnittstyp und einem Referenz-Geschwindigkeits-Zeit-Verlauf (21; 22) zugewiesen ist, welcher von dem Abschnittstyp abhängig ist, und
wobei mit den Parametern (Aₓ, A_{x-y}) ausgehend von dem Referenz-Geschwindigkeits-Zeit-Verlauf (21; 22) ein voraussichtlicher Geschwindigkeits-Zeit-Verlauf (23) bestimmbar ist.

11. System zur Bestimmung einer prognostizierten Längsführung für ein Fahrzeug (10), wobei das System (20) Steuermittel (1), eine Eingabevorrichtung (5) zur Vorgabe einer Fahroute des Fahrzeugs (10) und eine Ausgabevorrichtung (6) zur Ausgabe der Längsführung umfasst,
wobei die Fahroute von einer aktuellen Position des Fahrzeugs (10) bis zu einer Zielposition der Fahroute verläuft,
wobei das System (20) ausgestaltet ist, um mittels der Steuermittel (1) die Fahroute in Abschnitte (41-45) zu unterteilen, wobei jeder Abschnitt (41-45) einem vorbestimmten Abschnittstyp zugeordnet ist, wobei jedem Abschnitt (41-45) ein Referenz-Geschwindigkeits-Zeit-Verlauf (21; 22) zugeordnet ist, welcher von dem Abschnittstyp des jeweiligen Abschnitts (41-45) abhängig ist,
wobei das System (20) ausgestaltet ist, um mittels der Steuermittel (1) einen voraussichtlichen Geschwindigkeits-Zeit-Verlaufs (23) für jeden Abschnitt (41-45) zu bestimmen, indem die Steuermittel (1) den Referenz-Geschwindigkeits-Zeit-Verlauf (21; 22) des jeweiligen Abschnitts (41-45) mit Parametern (Aₓ, A_{x-y}), welche von einem aktuellen Fahrer abhängig sind, beaufschlagt, um den voraussichtlichen Geschwindigkeits-Zeit-Verlauf (23) des jeweiligen Abschnitts (41-45) zu bestimmen, und wobei das System (20) ausgestaltet ist, um mittels der Steuermittel (1) die Längsführung mittels der voraussichtlichen Geschwindigkeits-Zeit-Verläufe (23) der Abschnitte (41-45) der Fahrroute zu bestimmen.

12. System nach Anspruch 10 oder 9, **dadurch gekennzeichnet, dass** das System (20) zur Durchführung des Verfahrens nach einem Ansprüche 1-9 ausgestaltet ist.

13. Fahrzeug mit einem System (20) nach einem der Ansprüche 10-12.
